(19)

Europäisches
Patentamt
European
Patent Office
Office européen
des brevets

(11) **EP 2 230 163 A1**

(12) **EUROPEAN PATENT APPLICATION**

(43) Date of publication:
  **22.09.2010 Bulletin 2010/38**

(51) Int Cl.:
  **B62J 6/04** *(2006.01)*    **B62J 15/00** *(2006.01)*

(21) Application number: **09179206.9**

(22) Date of filing: **15.12.2009**

(84) Designated Contracting States:
  **AT BE BG CH CY CZ DE DK EE ES FI FR GB GR
  HR HU IE IS IT LI LT LU LV MC MK MT NL NO PL
  PT RO SE SI SK SM TR**
  Designated Extension States:
  **AL BA RS**

(30) Priority: **16.03.2009 JP 2009062509**

(71) Applicant: **Yamaha Hatsudoki Kabushiki Kaisha
  Iwata-shi, Shizuoka 438-8501 (JP)**

(72) Inventor: **Oishi, Takayuki
  Shizuoka-ken 438-8501 (JP)**

(74) Representative: **Schoppe, Fritz
  Schoppe, Zimmermann, Stöckeler & Zinkler
  Patentanwälte
  Postfach 246
  82043 Pullach bei München (DE)**

(54) **Motorcycle with tail lamp arrangement**

(57)    A motorcycle according to the present invention includes: a frame (2) extending in a front-rear direction; a rear wheel (8); right and left covers (11) that cover right and left sides of the frame (2) located above the rear wheel (8) ; a tail lamp (12) arranged above the rear wheel (8) and connected to rear portions of the right and left covers (11), the tail lamp at least having a surface of a translucent member directed obliquely downwardly and rearwardly; and a mudguard (14) having a first portion (19) extending obliquely downwardly and rearwardly from a front side of the surface of the translucent member to cover the surface of the translucent member in a bottom view, and a second portion (20) extending downwardly from a rear portion of the first portion (19) at an angle with respect to a ground surface that is at least larger than a corresponding angle of the first portion (19), the second portion having a license plate attachment portion (18).

EP 2 230 163 A1

## Description

1. Field of the Invention

The present invention relates to a motorcycle, in particular, a motorcycle including a tail lamp arranged above a rear wheel and at least having a surface of a translucent member directed obliquely downwardly and rearwardly.

2. Description of the Related Art

In some motorcycles, a surface of a translucent member of a tail lamp is directed obliquely downwardly and rearwardly.

JP 4005377 B discloses a motorcycle including such a tail lamp. According to JP 4005377 B, the motorcycle includes a rear fender which is located below a tail lamp and to which a license plate can be attached. The rear fender is inclined obliquely downwardly and rearwardly in a side view. A mudguard of the motorcycle is simply shaped to extend obliquely downwardly.

SUMMARY OF THE INVENTION

It is an object of the present invention to provide a motorcycle including a mudguard that suitably guards a tail lamp from a mud splash while securing the visibility of a license plate from a rear side thereof without the need to increase the size of the mudguard.

In order to solve the above-mentioned problem, a motorcycle according to the present invention includes: a frame extending in a front-rear direction of a vehicle body; a rear wheel supported to be swingable with respect to the frame; a right cover and a left cover that cover at least a right side and a left side of the frame located higher up than the rear wheel; a tail lamp which is arranged higher up than the rear wheel and connected to a rear portion of each of the right cover and the left cover, the tail lamp at least having a surface of a translucent member directed obliquely downwardly and rearwardly; and a mudguard having a first portion extending obliquely downwardly and rearwardly from a front side of the surface of the translucent member in the front-rear direction of the motorcycle to cover the surface of the translucent member in a bottom view, and a second portion extending downwardly from a rear portion of the first portion at an angle with respect to a ground surface that is at least larger than a corresponding angle of the first portion, the second portion having a license plate attachment portion to which a license plate is capable of being attached.

According to the present invention described above, it is possible to provide a motorcycle that has a compact rear portion and sufficiently blocks a mud splash toward a vehicle body.

BRIEF DESCRIPTION OF THE DRAWINGS

In the accompanying drawings:

FIG. 1 is a side view of a motorcycle according to an embodiment of the present invention;
FIG. 2 is a back view of the motorcycle according to this embodiment of the present invention;
FIG. 3 is a side view of a rear fender and a mudguard;
FIG. 4 is a back view of the mudguard;
FIG. 5 is a cross-sectional view of a first portion taken along the plane A-A of FIG. 3;
FIG. 6 illustrates a first method for defining an inclination angle;
FIG. 7 illustrates a second method for defining the inclination angle;
FIG. 8 illustrates a third method for defining the inclination angle;
FIG. 9 illustrated a first modification of the mudguard;
FIG. 10 illustrates a second modification of the mudguard;
FIG. 11 is a side view illustrating a positional relationship between a tail lamp and the mudguard;
FIG. 12 is a top view illustrating the positional relationship between the tail lamp and the mudguard; and
FIG. 13 is a side view illustrating a case where a separation gap is provided between the tail lamp and the mudguard.

DETAILED DESCRIPTION OF THE INVENTION

An embodiment of the present invention is described below with reference to the drawings.

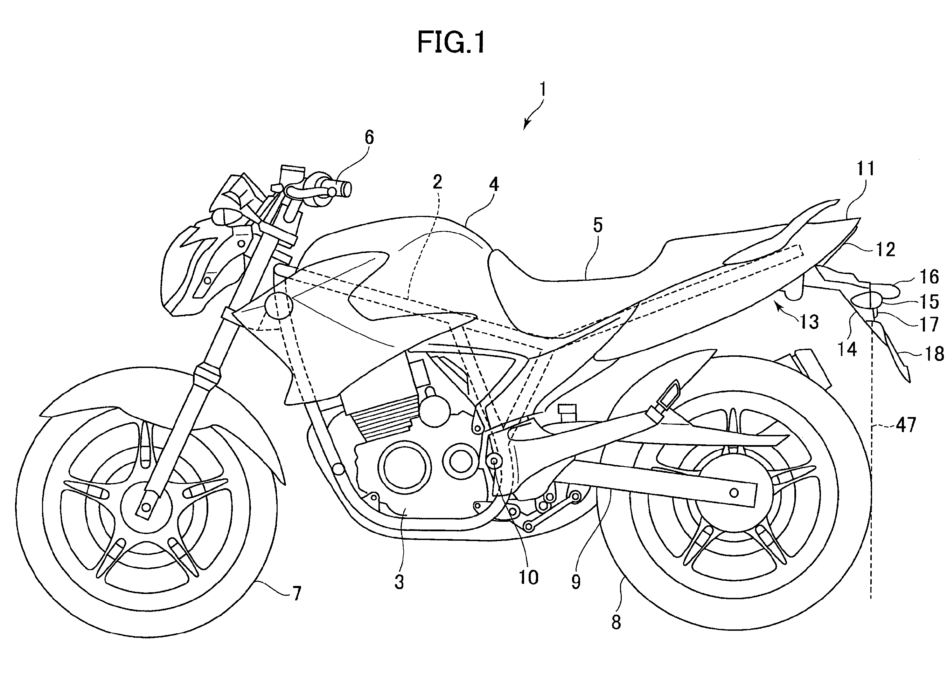

FIG. 1 is a side view of a motorcycle 1 according to this embodiment. The motorcycle 1 includes an engine 3 mounted on a frame 2 extending in a front-rear direction of a vehicle body, a fuel tank 4, a seat 5, a front wheel 7, a rear wheel 8, and a swing arm 9 that rotatably supports the rear wheel 8. The swing arm 9 is pivotably attached to a pivot 10 of the frame 2. Thus, the rear wheel 8 is supported to be swingable about the pivot 10 with respect to the frame 2. While a sports-type motorcycle is illustrated as the motorcycle 1 in FIG. 1, this is merely illustrative, and it is not intended to limit the type of motorcycle 1. In FIG. 1, components that are not directly related to the present invention, such as brake pads, hydraulic piping, and electrical wiring, are not illustrated.

At the rear portion of the vehicle body of the motorcycle 1, there are further provided right and left covers 11 that cover the right and left sides of the frame 2 and are located above the rear wheel 8, a tail lamp 12 arranged above the rear wheel 8 and connected to the rear portions of the covers 11, a rear fender 13 that covers the rear wheel 8 from above and is connected to the covers 11 below the frame 2, and a mudguard 14. Various safety components such as directional indicators 15, a license plate light 16, and a reflection panel 17 are attached to the mudguard 14. Reference numeral 18 denotes a license plate attachment portion to which a license plate is capable of being attached (not shown).

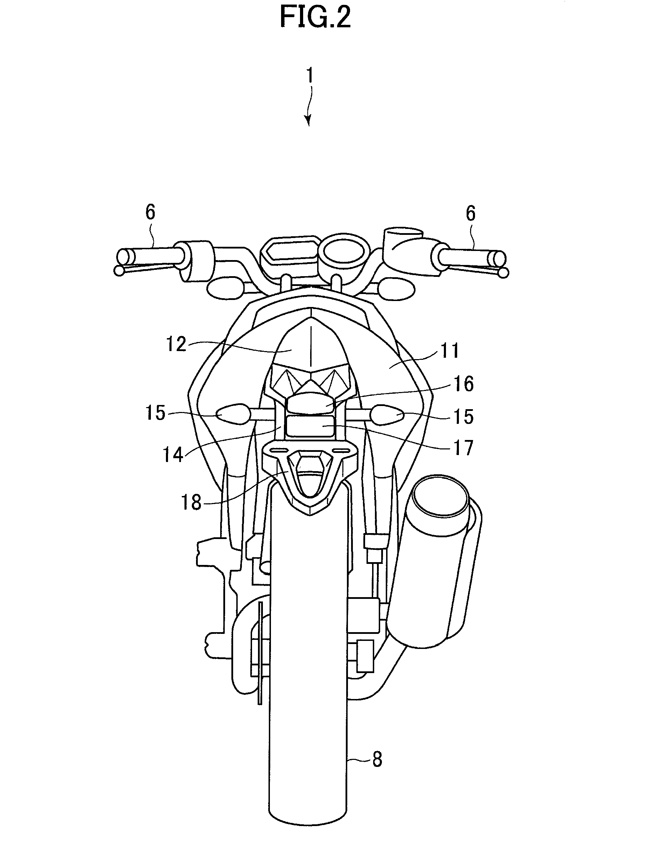

FIG. 2 is a back view of the motorcycle 1 according to this embodiment. In FIG. 2, the positional relationship of handlebars 6, the rear wheel 8, the covers 11, the tail lamp 12, the mudguard 14, the directional indicators 15, the license plate light 16, the reflection panel 17, and the license plate attachment portion 18 is clearly illustrated.

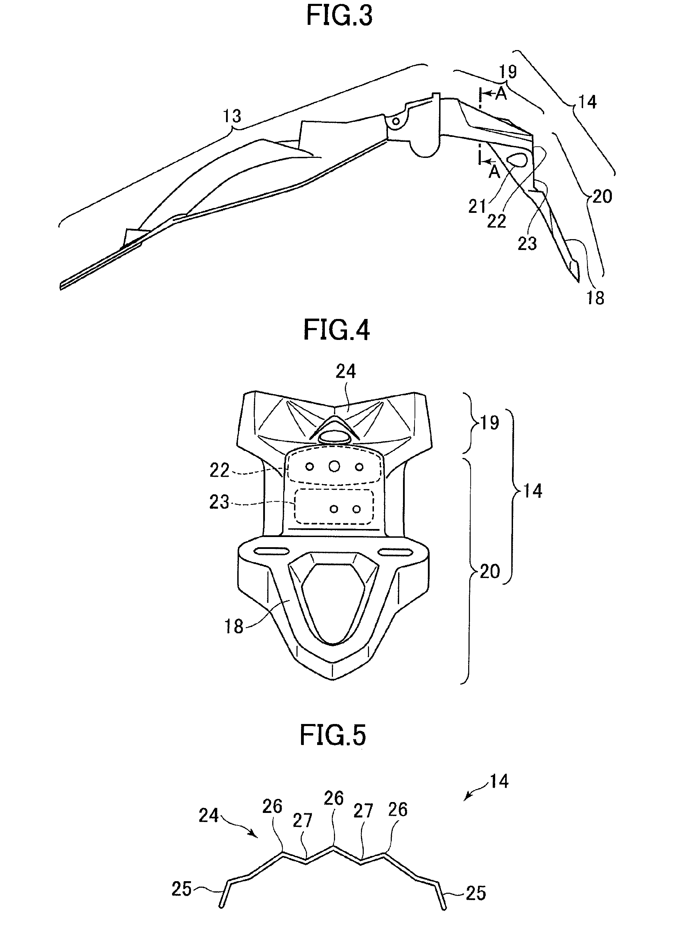

FIG. 3 is a side view of the rear fender 13 and the mudguard 14. In this embodiment, the rear fender 13 and the mudguard 14 are formed integrally with each other by molding of a synthetic resin such as polypropylene. However, the rear fender 13 and the mudguard 14 may be fabricated separately to be connected together by a known method such as screwing, or to be kept separated from each other. Further, the material of the rear fender 13 and the mudguard 14 is not particularly limited.

The mudguard 14 is divided into a first portion 19 and a second portion 20. This dividing does not immediately mean that the mudguard 14 is physically divided into the first portion 19 and the second portion 20. The dividing means that the mudguard 14 is divided into portions in accordance with their respective functions for convenience. It is a matter of course that the first portion 19 and the second portion 20 may be fabricated separately and then joined together by a known method such as screwing or bonding. As illustrated in the figure, the first portion 19 extends in an inclined manner obliquely downwardly and rearwardly with respect to the motorcycle 1. The second portion 20 is connected to the rear portion of the first portion 19. The second portion 20 extends downwardly at an inclination angle with respect to the ground surface that is larger than the inclination angle of the first portion 19 with respect to the ground surface. A hole which serves as a directional indicator attachment portion 21 is formed in each side surface of the mudguard 14. The license plate attachment portion 18, a license plate light attachment portion 22, and a reflection panel attachment portion 23 are provided in the second portion 20.

FIG. 4 is a back view of the mudguard 14. As illustrated in FIG. 4, the first portion 19 has a concave-convex shape portion 24 for increasing the rigidity on its upper surface. In the second portion 20, the license plate light attachment portion 22, the reflection panel attachment portion 23, and the license plate attachment portion 18 are provided in this order from above. As is apparent from the figure, those elements have high visibility from the back side of the motorcycle 1. This provides excellent visibility of a reflection panel and the license plate from the rear side thereof when they are attached. This is because the inclination angle of the second portion 20 with respect to the ground surface is relatively large as described later. The license plate light attachment portion 22 is provided with holes for attachment of the license plate light 16 and for passage of wires. The reflection panel attachment portion 23 is provided with holes in an asymmetrical arrangement in the right-left direction, which prevents upside-down attachment of the reflection panel 17.

FIG. 5 is a cross-sectional view of the first portion 19 taken along the plane A-A of FIG. 3. The first portion 19 has a U-shaped cross section opened substantially downwardly. Side wall portions 25 extending downwardly are provided at both ends of the first portion 19 in the right-left direction. The concave-convex shape portion 24 is provided on the upper surface of the first portion 19. In this embodiment, the concave-convex shape portion 24 includes three convex portions 26 that project upwardly and two concave portions 27 that are depressed downwardly. The side wall portions 25 and the concave-convex shape portion 24 both serve to increase the rigidity of the first portion 19. The numbers of concave portions and convex portions of the concave-convex shape portion 24 are not limited to those used in this embodiment. Any cross section with two or more projections, that is, two or more convex portions 26 and one or more concave portions 27, in the right-left direction of the motorcycle 1 can provide an increased rigidity compared to a simple cross section in the shape of an inverted letter V.

Incidentally, in the motorcycle 1 according to this embodiment, the first portion 19 and the second portion 20 of the mudguard 14 are different in inclination angle with respect to the ground surface. The inclination angle may be defined in any one of a plurality of methods described below.

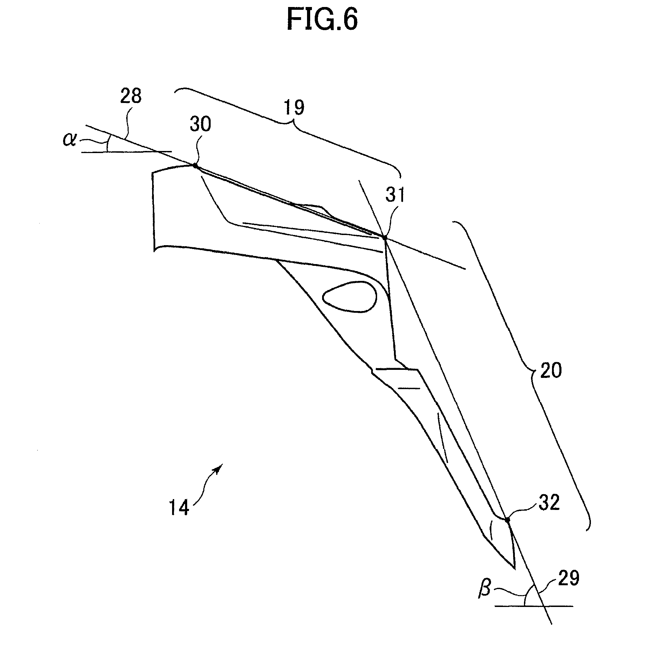

FIG. 6 illustrates a first method for defining the inclination angle. In the method, with the mudguard 14 in a side view, the inclination angle is defined as an angle between a plane or a straight line that is tangent to the upper surface of the mudguard 14 and the ground surface. In FIG. 6, a first tangent plane 28 and a second tangent plane 29 are illustrated. The first tangent plane 28 is defined to pass through points 30 and 31 of the mudguard 14 which project upwardly. The second tangent plane 29 is defined to pass through points 31 and 32 of the mudguard 14 which project upwardly. In defining tangent planes or lines, local features provided for specific purposes, such as the projections in the concave-convex shape portion 24 for increasing the rigidity, are ignored for convenience. When such tangent planes are considered, the position at which the angle of the tangent plane with respect to the ground surface changes, that is, the point 31 in this example, is defined as the boundary between the first portion 19 and the second portion 20. An angle $\alpha$ of the first tangent plane 28 with respect to the ground surface is defined as the inclination angle of the first portion 19 with respect to the ground surface. An angle $\beta$ of the second tangent plane 29 with respect to the ground surface is defined as the inclination angle of the second portion 20 with respect to the ground surface.

As illustrated, $\alpha$ is less than $\beta$. Preferably, $\alpha$ is less than 45° and $\beta$ is more than 45°. When such conditions are met, the first portion 19 effectively blocks a mud splash toward the vehicle body, particularly toward the tail lamp 12, and the second portion 20 provides excellent visibility of the license plate when it is attached thereto. In other words, the first portion 19 is larger in the front-rear direction than in the up-down direction, and the second portion 20 is smaller in the front-rear direction than in the up-down direction.

While the inclination angle is defined as an angle of a tangent plane with respect to the ground surface in the above description, the inclination angle may alternatively be defined as an angle of a tangent line in any cross section in the front-rear direction of the motorcycle 1, for example, a cross section along the center line of the motorcycle 1, with respect to the ground surface.

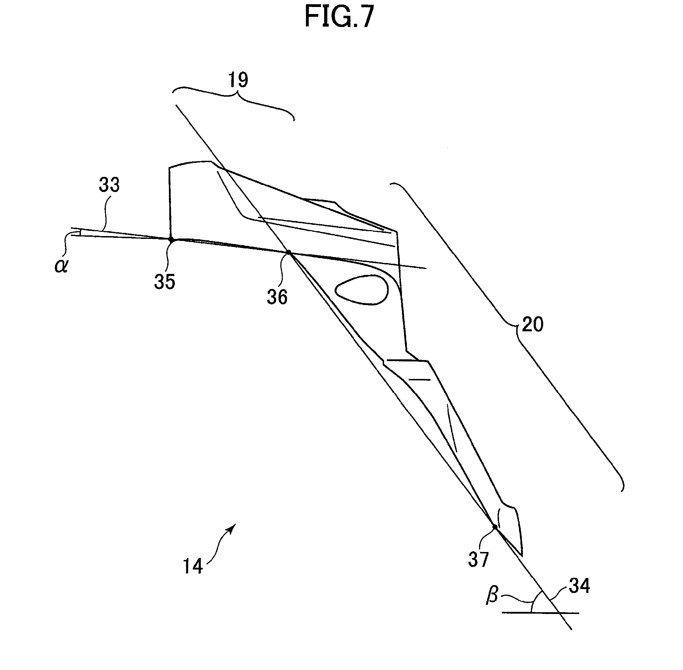

FIG. 7 illustrates a second method for defining the inclination angle. In the method, with the mudguard 14 in a side view, the inclination angle is defined as an angle between a plane or a straight line that is tangent to the lower surface of the mudguard 14 and the ground surface. That is, as illustrated in FIG. 7, the inclination angle $\alpha$ of the first portion 19 is defined by a first tangent plane 33 which passes through points 35 and 36. The inclination angle $\beta$ of the second portion 20 is defined by a second tangent plane 34 which passes through points 36 and 37. The point 36 is defined as the boundary between the first portion 19 and the second portion 20.

The relationship between the angles $\alpha$ and $\beta$ is the same as that in the case of the first method. That is, $\alpha$ is less than $\beta$. Preferably, $\alpha$ is less than 45° and $\beta$ is more than 45°. Similarly, a tangent line in any cross section in the front-rear direction of the motorcycle 1 may be used to define the inclination angle with respect to the ground surface.

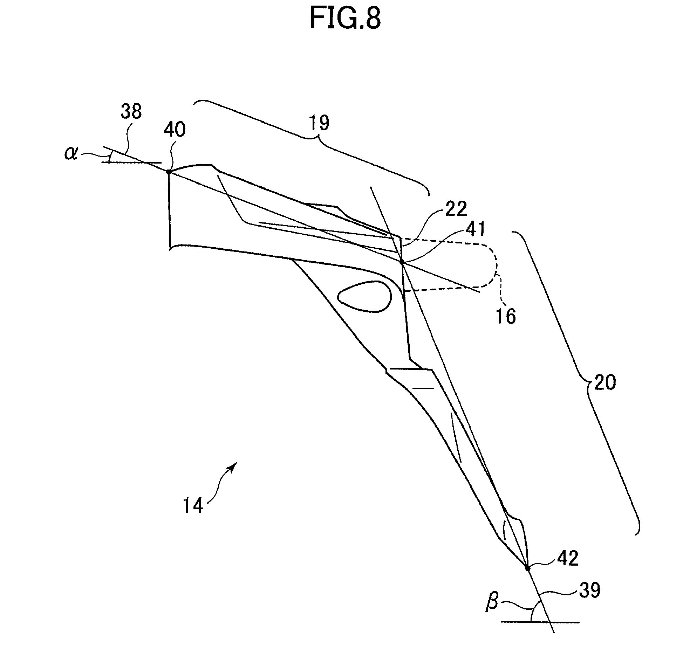

FIG. 8 illustrates a third method for defining the inclination angle. In the method, a portion of the mudguard 14 from its front end to the license plate light attachment portion 22 is defined as the first portion 19, and a portion of the mudguard 14 from the license plate light attachment portion 22 to the rear end of the mudguard 14 is defined as the second portion 20. That is, the license plate light 16 is arranged at the boundary between the first portion 19 and the second portion 20. The inclination angle of the first portion 19 is defined as the angle $\alpha$ of a first plane 38, which passes through a front-end uppermost point 40 of the first portion 19 and a center point 41 of the license plate light attachment portion 22, with respect to the ground surface. The inclination angle of the second portion 20 is defined as the angle $\beta$ of a second plane 39, which passes through the center point 41 of the license plate light attachment portion 22 and a rear-end lowermost point 42 of the second portion 20, with respect to the ground surface.

Also using this method, the relationship between the angles $\alpha$ and $\beta$ is the same as that in the case of the first method. That is, $\alpha$ is less than $\beta$. Preferably, $\alpha$ is less than 45° and $\beta$ is more than 45°. A straight line in any cross section in the front-rear direction of the motorcycle 1 may be used to define the inclination angle with respect to the ground surface. While the first plane 38 and the second plane 39 are defined to pass through the center point 41 of the license plate light attachment portion 22, the first plane 38 and the second plane 39 may instead be defined using the uppermost or lowermost point of the license plate light attachment portion 22.

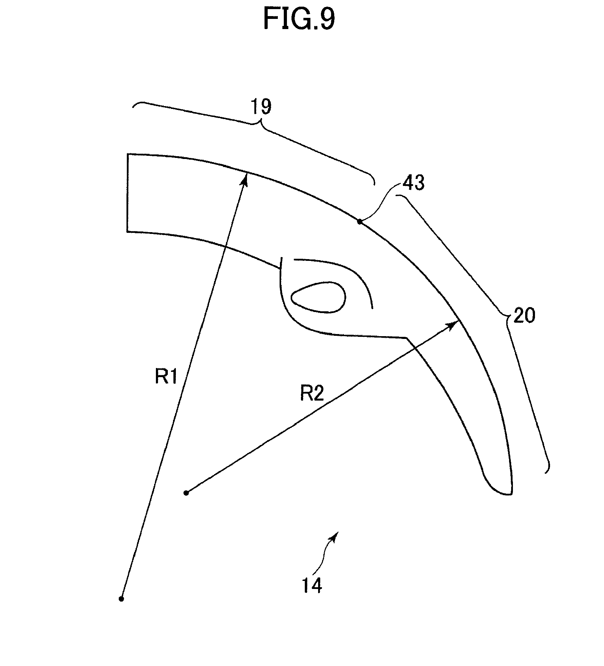

The shape of the mudguard 14 according to this embodiment is not limited to those illustrated in FIGS. 6 to 8, and may be modified in various ways. FIG. 9 illustrates a first modification of the mudguard 14. In the modification, the first portion 19 and the second portion 20 of the mudguard 14 are gently curved downwardly in a side view. When the curvature of the upper surface of the first portion 19 is defined as $\chi 1$ and the curvature of the upper surface of the second portion 20 is defined as $\chi 2$, $\chi 1$ is less than $\chi 2$. The boundary between the first portion 19 and the second portion 20 is defined as an inflection point 43 at which the curvature of the mudguard 14 changes. In FIG. 9, a curvature radius R1 of the first portion 19 (R1=1/$\chi$1) and a curvature radius R2 of the second portion 20 (R2=1/$\chi$2) are illustrated.

In this modification, the respective inclination angles of the first portion 19 and the second portion 20 with respect to the ground surface may be defined as follows, for example. For the first portion 19, the inclination angle may be defined as an angle between the ground surface and a plane or a straight line that passes through the front-end uppermost point on the upper surface of the first portion 19 and the inflection point 43. For the second portion 20, the inclination angle may be defined as an angle between the ground surface and a plane or a straight line that passes through the inflection point 43 and the rear-end lowermost point on the upper surface of the second portion 20. Alternatively, respective average inclination angles of the first portion 19 and the second portion 20 may be employed. In this case, when the inclination angle and the area of the first portion 19 are respectively defined as $\alpha$ and S1, the inclination angle and the area of the second portion 20 are respectively defined as $\beta$ and S2, x represents the inclination angle at an arbitrary point on the mudguard 14, and dS represents a minute section, $\alpha$ and $\beta$ can be obtained by the following formulas:

[Formula 1]

$$\alpha = \frac{1}{S1} \int x\,dS$$

$$\beta = \frac{1}{S2} \int x\,dS$$

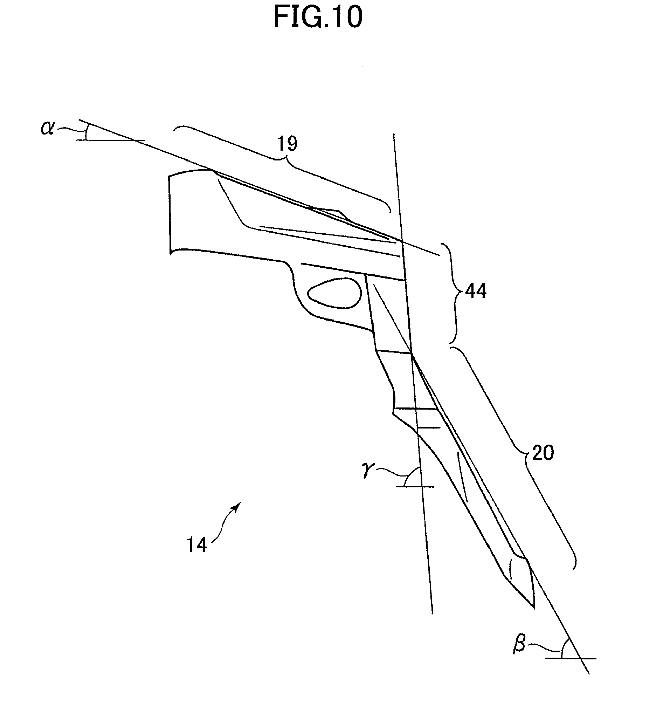

FIG. 10 illustrates a second modification of the mudguard 14. In the modification, a third portion 44 is provided between the first portion 19 and the second portion 20. An inclination angle γ of the third portion 44 is different from each of the inclination angle α of the first portion 19 and the inclination angle β of the second portion 20. The inclination angles may be defined in accordance with any one of the methods described above. Also in this case, the relationship between the angles α and β is the same as those in the case of the first method. That is, α is less than β. Preferably, α is less than 45° and β is more than 45°.

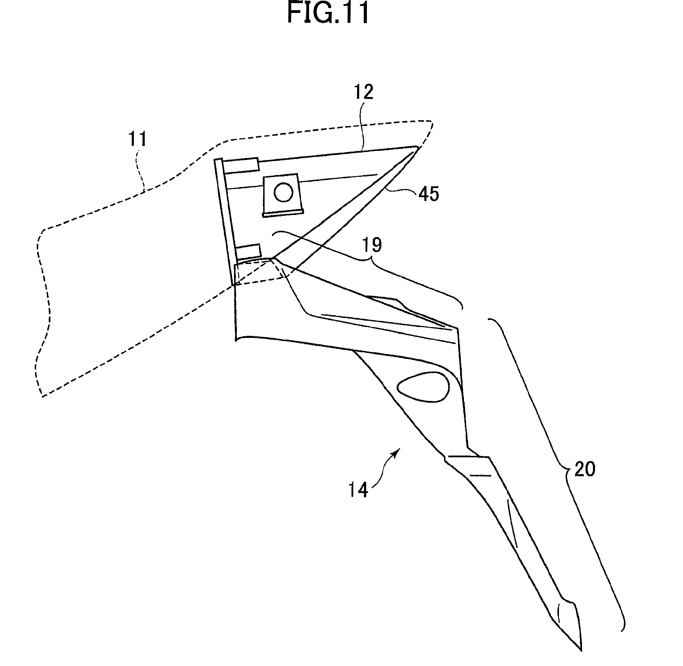

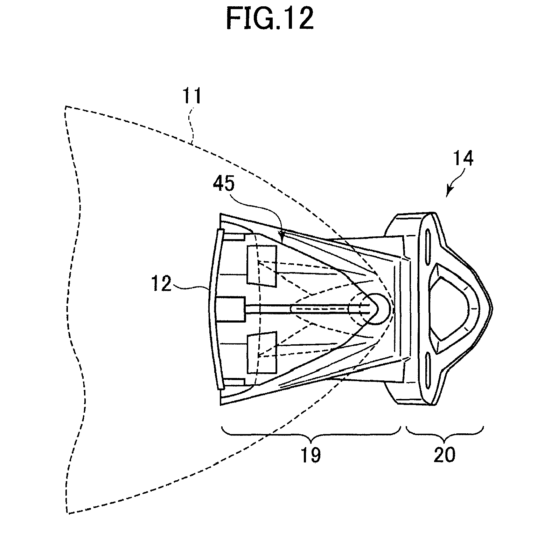

Next, the positional relationship between the mudguard 14 and various components of the motorcycle 1 according to this embodiment is described. FIGS. 11 and 12 are a side view and a top view, respectively, illustrating the positional relationship between the tail lamp 12 and the mudguard 14. In FIGS. 11 and 12, the external shape of the covers 11 is indicated by the broken line.

The tail lamp 12 has a surface of a translucent member 45 directed obliquely downwardly and rearwardly. The surface of the translucent member 45 is preferably a lens surface that diffuses a light beam emitted from a light source such as a light emitting diode or a bulb housed in the tail lamp 12, and is molded from a translucent resin such as polycarbonate or polymethyl methacrylate. However, a lens member may be separately provided in the tail lamp 12, in which case the surface of the translucent member 45 may simply be a transparent cover of any material or in any color.

As can be seen from FIG. 11, the first portion 19 of the mudguard 14 extends obliquely downwardly and rearwardly from the front end of the surface of the translucent member 45 in the front-rear direction of the motorcycle. This allows the first portion 19 to be arranged close to the surface of the translucent member 45. As can be seen from FIG. 12, the first portion 19 is arranged to cover the surface of the translucent member 45 from below. That is, the first portion 19 is larger in dimension in the right-left direction of the motorcycle than the surface of the translucent member 45 at the front portion of the surface of the translucent member 45 in the front-rear direction of the motorcycle. The first portion 19 is also larger in dimension in the right-left direction of the motorcycle than the surface of the translucent member 45 at any location in the front-rear direction of the motorcycle. The first portion 19 extends further rearward than the surface of the translucent member 45. Therefore, the second portion 20 is located further rearward than the rear end of the surface of the translucent member 45. The thus configured first portion 19 effectively blocks a mud splash toward the vehicle body of the motorcycle 1, particularly toward the surface of the translucent member 45 of the tail lamp 12.

As illustrated in FIG. 12, the covers 11 are shaped to cover the surface of the translucent member 45 from above and to become smaller in dimension in the right-left direction of the motorcycle, extending rearwardly in a plan view. This prevents entry of external light into the tail lamp 12, and makes the rear portion of the vehicle body of the motorcycle 1 compact.

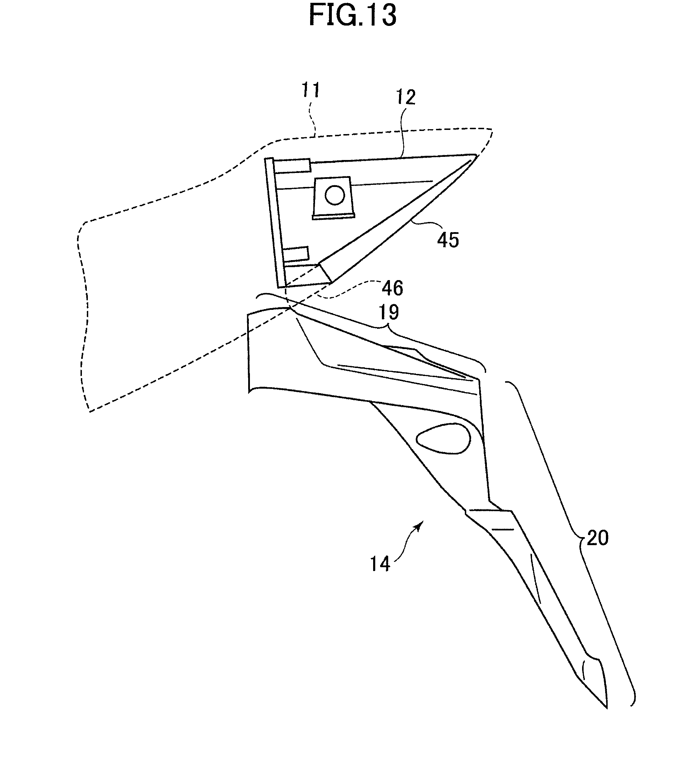

In this embodiment, the first portion 19 is arranged to extend from the front end of the surface of the translucent member 45 in the front-rear direction of the motorcycle in order to arrange the first portion 19 as close as possible to the surface of the translucent member 45. However, a separation gap 46 may be provided between the surface of the translucent member 45 and the first portion 19 as illustrated in FIG. 13. Some kind of plate may be inserted into the separation gap 46, or the covers 11 may be extended from both the right and left sides to occupy the gap 46. In this case, the first portion 19 is configured to extend from a location forward of the surface of the translucent member 45 in the front-rear direction of the motorcycle.

The license plate attachment portion 18 of the second portion 20 is preferably provided rearwardly of the rear end of the rear wheel 8 as illustrated in FIG. 1. With such a configuration, mud splashed by the rear wheel 8 is less likely to adhere to the surface of the license plate (not shown). For ease of understanding, the position corresponding to the rear end of the rear wheel 8 is indicated by a broken line 47 in FIG. 1.

As described above, in this embodiment, the angle of each of the first portion 19 and the second portion 20 may be defined as an angle of the upper surface of each portion with respect to the ground surface. Alternatively, the angle of each of the first portion 19 and the second portion 20 may be defined as an angle of the lower surface of each portion with respect to the ground surface in a side view. Still alternatively, the angle of each of the first portion 19 and the second portion 20 may be defined as an angle of each portion in its cross section in the front-rear direction of the motorcycle with respect to the ground surface. Irrespective of the method employed to define the angle, it is possible to sufficiently block a mud splash toward the vehicle body by making the angle of the second portion 20 larger than the angle of the first portion 19.

In this embodiment, the license plate light 16 is arranged at the boundary between the first portion 19 and the second portion 20. With this configuration, the visibility of the license plate is improved by irradiation from the license plate light 16.

In this embodiment, the boundary between the first portion 19 and the second portion 20 is defined as a position at which the angle of the mudguard 14 with respect to the ground surface changes or as a position at which the curvature of the mudguard 14 changes. With this configuration, the first portion 19 mainly provides a mud blocking effect, and the second portion 20 mainly provides excellent visibility of the license plate. This configuration achieves functional separation, and also makes the mudguard 14 compact.

In this embodiment, the third portion 44 maybe provided between the first portion 19 and the second portion 20, and the angle of the third portion 44 with respect to the ground surface is different from each of the corresponding angles of the first portion 19 and the second portion 20.

In this embodiment, the mudguard 14 extends rearwardly from the front end of the surface of the translucent member 45 in the front-rear direction of the motorcycle. With this configuration, the distance between the surface of the translucent member 45 and the first portion 19 is reduced.

In this embodiment, the first portion 19 includes the side wall portion 25 extending downwardly at each of both ends of the first portion 19 in the right-left direction of the motorcycle. With this configuration, the rigidity of the first portion 19 is enhanced.

In this embodiment, the first portion 19 has the concave-convex shape portion 24 on its upper surface. With this configuration, the rigidity of the first portion 19 is enhanced.

In this embodiment, the license plate attachment portion 18 is provided rearward of the rear end of the rear wheel 8. This configuration makes it less likely that mud will adhere to the surface of the license plate.

In this embodiment, the motorcycle 1 further includes the rear fender 13 that is connected to the right and left covers 11 to cover the rear wheel 8 from above, and the mudguard 14 and the rear fender 13 are formed integrally with each other. This configuration allows reduction in number of components, thereby facilitating assembly.

In this embodiment, the right and left covers 11 cover the surface of the translucent member 45 from above in a plan view. This configuration prevents entry of external light into the tail lamp 12.

In this embodiment, the light source of the tail lamp 12 is a light emitting diode. This realizes low power consumption.

In this embodiment, the rear portions of the right and left covers 11 become smaller in dimension in the right-left direction of the motorcycle, extending rearwardly in a plan view. This configuration makes the rear portion of the vehicle body compact.

In this embodiment, the first portion 19 is larger in dimension in the front-rear direction than in the up-down direction in a side view. This configuration reduces the distance between the first portion 19 and the surface of the translucent member 45.

In this embodiment, the second portion 20 is smaller in dimension in the front-rear direction than in the up-down direction in a side view. This configuration provides good visibility of a license plate from the rear side thereof.

In this embodiment, the second portion 20 is located further rearward than the rear end of the surface of the translucent member 45 in a side view. With this configuration, the surface of the translucent member 45 is covered by the first portion 19.

In this embodiment, the mudguard 14 is larger than the surface of the translucent member 45 in dimension in the right-left direction of the motorcycle at a location corresponding to the front portion of the surface of the translucent member 45 in the front-rear direction of the motorcycle. In addition, the first portion 19 is larger than the surface of the translucent member 45 in dimension in the right-left direction of the motorcycle at any location in the front-rear direction of the motorcycle. With this configuration, the surface of the translucent member 45 is covered by the first portion 19.

**Claims**

1. A motorcycle (1), comprising:

   a frame (2) extending in a front-rear direction of a vehicle body;
   a rear wheel (8) supported to be swingable with respect to the frame (2);
   a right cover (11) and a left cover (11) that cover at least a right side and a left side of the frame (2) located higher up than the rear wheel (8);
   a tail lamp (12) which is arranged higher up than the rear wheel (8) and connected to a rear portion of each of the right cover (11) and the left cover (11), the tail lamp (12) at least having a surface of a translucent member (45) directed obliquely downwardly and rearwardly; and
   a mudguard (14) having
   a first portion (19) extending obliquely downwardly and rearwardly from a front of the surface of the translucent member (45) in the front-rear direction of the motorcycle (1) to cover the surface of the translucent member (45) in a bottom view, and
   a second portion (20) extending downwardly from a rear portion of the first portion (19) at an angle with respect to a ground surface that is at least larger than a corresponding angle of the first portion (19), the second portion (20) having a license plate attachment portion (18) to which a license plate is capable of being attached.

2. The motorcycle (1) according to claim 1, wherein the angle of each of the first portion (19) and the second portion (20) is defined either as an angle of an upper surface of each of the first portion (19) and the second portion (20) with respect to the ground surface or as an angle of a lower surface of each of the first portion (19) and the second portion (20) with respect to the ground surface in a side view or as an angle of each of the first portion (19) and the second portion (20) with respect to the ground surface in a cross section in the front-rear direction of the motorcycle (1).

3. The motorcycle (1) according to claim 1, wherein a license plate light (16) is arranged at a boundary between the first portion (19) and the second portion (20).

**4.** The motorcycle (1) according to claim 1, wherein a boundary between the first portion (19) and the second portion (20) is defined as a position at which an angle of the mudguard (14) with respect to the ground surface changes or as a position at which a curvature of the mudguard (14) changes.

**5.** The motorcycle (1) according to claim 1, wherein a third portion (44) is provided between the first portion (19) and the second portion (20), and an angle of the third portion (44) with respect to the ground surface is different from each of the corresponding angles of the first portion (19) and the second portion (20).

**6.** The motorcycle (1) according to claim 1, wherein the mudguard (14) extends rearwardly from a front end of the surface of the translucent member (45) in the front-rear direction of the motorcycle (1).

**7.** The motorcycle (1) according to claim 1, wherein the first portion (19) comprises a side wall portion (25) extending downwardly at each of both ends of the first portion (19) in a right-left direction of the motorcycle (1).

**8.** The motorcycle (1) according to claim 1, wherein the first portion (19) has a concave-convex shape portion (24) on its upper surface.

**9.** The motorcycle (1) according to claim 1, wherein the license plate attachment portion (18) is provided rearwardly of a rear end of the rear wheel (8).

**10.** The motorcycle (1) according to claim 1, further comprising a rear fender (13) that is connected to the right cover (11) and the left cover (11) to cover the rear wheel (8) from above,
wherein the mudguard (14) and the rear fender (13) are formed integrally with each other.

**11.** The motorcycle (1) according to claim 1, wherein the right cover (11) and the left cover (11) cover the surface of the translucent member (45) from above in a plan view.

**12.** The motorcycle (1) according to claim 1, wherein a light source of the tail lamp (12) comprises a light emitting diode.

**13.** The motorcycle (1) according to claim 1, wherein the rear portion of each of the right cover (11) and the left cover (11) becomes smaller in dimension in a right-left direction of the motorcycle (1), extending rearwardly in a plan view.

**14.** The motorcycle (1) according to claim 1, wherein the first portion (19) is larger in dimension in the front-rear direction than in an up-down direction in a side view.

**15.** The motorcycle (1) according to claim 1, wherein the second portion (20) is smaller in dimension in the front-rear direction than in an up-down direction in a side view.

**16.** The motorcycle (1) according to claim 1, wherein the second portion (20) is located further rearward than a rear end of the surface of the translucent member (45) in a side view.

**17.** The motorcycle (1) according to claim 8, wherein the mudguard (14) is larger than the surface of the translucent member (45) in dimension in a right-left direction of the motorcycle (1) at a location corresponding to a front portion of the surface of the translucent member (45) in the front-rear direction of the motorcycle (1).

**18.** The motorcycle (1) according to claim 1, wherein the first portion (19) is larger than the surface of the translucent member (45) in dimension in a right-left direction of the motorcycle (1) at any location in the front-rear direction of the motorcycle (1).

FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

Europäisches
Patentamt

European
Patent Office

Office européen
des brevets

**EUROPEAN SEARCH REPORT**

Application Number

EP 09 17 9206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 011 726 A1 (HONDA MOTOR CO LTD [JP]) 7 January 2009 (2009-01-07) * figures 1,6,10 * ----- | 1-18 | INV. B62J6/04 B62J15/00 |
| X | JP 62 189995 U (?) 3 December 1987 (1987-12-03) * figures 1,2,3 * ----- | 1-4, 6-12, 14-18 | |

TECHNICAL FIELDS
SEARCHED      (IPC)

B62J

The present search report has been drawn up for all claims

| Place of search | Date of completion of the search | Examiner |
|---|---|---|
| Munich | 27 January 2010 | Feber, Laurent |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 09 17 9206

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| EP 2011726 | A1 | 07-01-2009 | JP | 2009012642 A | 22-01-2009 |
| | | | US | 2009008893 A1 | 08-01-2009 |
| JP 62189995 | U | 03-12-1987 | JP | 4014312 Y2 | 31-03-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4005377 B